## Europäisches Patentamt

## European Patent Office

## Office européen des brevets

(11) Veröffentlichungsnummer: **0 327 103**
**A2**

# EUROPÄISCHE PATENTANMELDUNG

(21) Anmeldenummer: **89101902.8**

(22) Anmeldetag: **03.02.89**

(51) Int. Cl.⁴: **G01F 1/32**

(30) Priorität: **03.02.88 DE 3803192**

(43) Veröffentlichungstag der Anmeldung:
**09.08.89 Patentblatt 89/32**

(84) Benannte Vertragsstaaten:
**CH DE FR GB IT LI NL**

(71) Anmelder: **FLOWTEC AG**
**Kägenstrasse 7**
**CH-4153 Reinach BL 1(CH)**

(72) Erfinder: **Steiner, Kurt**
**Bielstrasse 32**
**CH-4153 Reinach BL 1(CH)**

(74) Vertreter: **Leiser, Gottfried, Dipl.-Ing. et al**
**Patentanwälte Prinz, Leiser, Bunke & Partner**
**Manzingerweg 7**
**D-8000 München 60(DE)**

(54) **Wirbelfrequenz-Durchflussmesser.**

(57) Der Wirbelfrequenz-Durchflußmesser hat einen Rohrkörper, der einen Strömungskanal für das Medium aufweist, dessen Durchfluß gemessen werden soll. Im Strömungskanal ist ein Staukörper angeordnet, der Kármán'sche Wirbel erzeugt, deren Folgefrequenz der Strömungsgeschwindigkeit des Mediums proportional ist. Ein Sensor, der auf die von den Wirbeln erzeugten Druckschwankungen anspricht, ist in einem Hohlraum angeordnet, der über Durchlässe mit dem Strömungskanal in Verbindung steht, damit die Druckschwankungen in den Hohlraum übertragen werden. Die Durchlässe sind durch ein Absperrorgan verschließbar, das durch ein Betätigungsteil von außen verstellbar ist. Dadurch ist es möglich, den Sensor nach dem Verschließen der Durchlässe aus dem Hohlraum zu entnehmen, ohne daß Strömungsmedium austreten kann.

FIG. 1

## Wirbelfrequenz-Durchflußmesser

Die Erfindung betrifft einen Wirbelfrequenz-Durchflußmesser mit einem Rohrkörper, der einen Strömungskanal für das Medium aufweist, dessen Durchfluß gemessen werden soll, einem im Strömungskanal angeordneten Staukörper zur Erzeugung von Wirbeln, deren Folgefrequenz der Strömungsgeschwindigkeit des Mediums proportional ist, und mit mindestens einem Sensor, der auf die von den Wirbeln erzeugten Druckschwankungen anspricht und in einem Hohlraum angeordnet ist, der durch verschließbare Durchlässe mit dem Strömungskanal in Verbindung steht.

Die Erfindung entstammt dem Gebiet der Durchflußmessung, die sich des Prinzips der Kármán'schen Wirbel bedient. Danach lösen sich von einem geeigneten Staukörper, wenn dieser einer turbulenten Strömung als Widerstand entgegensteht, periodisch und örtlich abwechselnd Wirbel ab. Die Frequenz dieser Wirbelabrisse und der dadurch verursachten Druckschwankungen ist proportional zur Durchflußgeschwindigkeit.

Im praktischen Betrieb derartiger Durchflußmesser kann es vorkommen, daß der auf die Druckschwankungen ansprechende Sensor zum Zweck der Reinigung, Wartung oder Reparatur aus dem Hohlraum, in dem er angeordnet ist, herausgenommen werden muß. Um zu vermeiden, daß der Hohlraum weiterhin durch die Durchlässe, die ihn mit dem Strömungskanal verbinden, dem Druck des strömenden Mediums ausgesetzt bleibt und möglicherweise sogar Strömungsmedium über den Hohlraum austritt, ist es aus der US-PS 4 334 668 bekannt, die Durchlässe verschließbar auszubilden. Zu diesem Zweck ist in dem Staukörper ein sich über dessen ganze Länge erstreckender Hohlraum ausgebildet, der in seinem oberen Teil, der über die Durchlässe mit dem Strömungskanal in Verbindung steht, den Sensor aufnimmt, während im unteren Teil ein kolbenartiges Verschlußteil gelagert ist, das durch eine Feder gegen das Ende des Sensors gedrückt wird. Wenn der Sensor aus dem Hohlraum entnommen wird, entspannt sich die Feder, wobei sie das kolbenartige Verschlußteil durch den Hohlraum nach oben bewegt. Dabei geht das kolbenartige Verschlußteil über die Durchlässe hinweg, und wenn der Sensor vollständig aus dem Hohlraum entnommen ist, sperrt das kolbenartige Verschlußteil den über die Durchlässe mit dem Strömungskanal verbundenen Teil des Hohlraums nach außen ab. Wenn der Sensor wieder in den Hohlraum eingeführt wird, drückt er das kolbenartige Verschlußteil gegen die Kraft der Feder nach unten. Da bei diesem bekannten Wirbelfrequenz-Durchflußmesser die Verstellung des kolbenartigen Verschlußteils in der Schließrichtung nur durch die Federkraft während der Entnahme des Sensors bewirkt wird, besteht im Fall von Strömungsmedien, die Ablagerungen verursachen, die Gefahr, daß das Verschlußteil hängenbleibt, so daß die Verbindung zwischen dem Strömungskanal und dem Außenraum nicht unterbrochen wird. Die Federkraft muß verhältnismäßig gering sein, da sie sonst der Einführung des Sensors einen zu großen Widerstand entgegensetzt, was das präzise Einführen des Sensors behindert und bei empfindlichen Sensoren die Gefahr mechanischer Beschädigungen hervorruft. Ferner ist es nicht möglich, die Verbindung zwischen dem Strömungskanal und dem den Sensor aufnehmenden Hohlraum zu sperren, ohne daß der Sensor entnommen wird. Als Nachteil ist auch anzusehen, daß die Durchlässe erst geschlossen werden, wenn der Sensor bereits teilweise aus dem Hohlraum entnommen ist, und daß sie bereits während des Einführens des Sensors wieder geöffnet werden. Schließlich eignet sich die bekannte Lösung nur für Wirbelfrequenz-Durchflußmesser, deren Staukörper so groß ist, daß darin ein Hohlraum gebildet werden kann, dessen Querschnitt und Länge ausreicht, um sowohl den Sensor als auch das kolbenartige Verschlußteil und die Feder aufzunehmen. Derartig große Staukörper finden sich nur bei Wirbelfrequenz-Durchflußmessern mit großen Nennweiten, d.h. großen Durchmessern des Strömungskanals.

Aufgabe der Erfindung ist die Schaffung eines Wirbelfrequenz-Durchflußmessers der eingangs angegebenen Art, bei dem ein sicheres Verschließen der Durchlässe unabhängig von der Entnahme des Sensors möglich ist und der auch für kleine Nennweiten geeignet ist.

Diese Aufgabe wird nach der Erfindung dadurch gelöst, daß zum Verschließen der Durchlässe ein durch ein Betätigungsteil von außen verstellbares Absperrorgan vorgesehen ist.

Bei dem erfindungsgemäßen Wirbelfrequenz-Durchflußmesser können die Durchlässe, die den Strömungskanal mit dem den Sensor aufnehmenden Hohlraum verbinden, mittels des Betätigungsteils unabhängig davon, ob sich der Sensor im Hohlraum befindet oder nicht, geschlossen und geöffnet werden. Die Schließkraft ist durch die auf das Betätigungsteil ausgeübte Kraft bestimmt, die nicht auf die Kraft einer Feder beschränkt ist und im Fall eines Widerstands, der beispielsweise durch Ablagerungen verursacht wird, beliebig groß gemacht werden kann. Die Durchlässe können vollständig geschlossen werden, bevor die Entnahme des Sensors begonnen wird, und sie werden erst wieder geöffnet, wenn der Sensor vollständig in den Hohlraum eingeführt ist. Auf diese Weise lassen sich auch empfindliche Sensoren ohne mechanische Beanspruchung leicht und präzise in den noch geschlossenen Hohlraum einführen.

Die Erfindung eignet sich sowohl für Wirbelfrequenz-Durchflußmesser großer Nennweiten, bei denen der Staukörper einen so großen Querschnitt hat, daß darin ein für die Aufnahme des Sensors und des Absperrorgans ausreichender Hohlraum gebildet werden kann, als auch für Wirbelfrequenz-Durchflußmesser kleiner Nennweiten, bei denen der den Sensor aufnehmende Hohlraum in der Wand des Rohrkörpers gebildet ist.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung von Ausführungsbeispielen, die in der Zeichnung dargestellt sind. In der Zeichnung zeigt:

Fig. 1 einen Längsschnitt durch einen Wirbelfrequenz-Durchflußmesser gemäß einer ersten Ausführungsform der Erfindung,

Fig. 2 eine Schnittansicht längs der Linie II-II von Fig. 1, wobei sich das Absperrorgan in der Sperrstellung befindet,

Fig. 3 dieselbe Schnittansicht wie in Fig. 2, wobei sich das Absperrorgan in der Offenstellung befindet,

Fig. 4 einen Längsschnitt durch einen Wirbelfrequenz-Durchflußmesser gemäß einer zweiten Ausführungsform der Erfindung, wobei sich das Absperrorgan in der Offenstellung befindet,

Fig. 5 eine Schnittansicht gemäß der Linie V-V von Fig. 4,

Fig. 6 eine teilweise Schnittansicht gemäß der Linie VI-VI von Fig. 4,

Fig. 7 einen Längsschnitt durch den Wirbelfrequenz-Durchflußmesser von Fig. 4, wobei sich das Absperrorgan in der Sperrstellung befindet,

Fig. 8 eine Schnittansicht gemäß der Linie VIII-VIII von Fig. 7,

Fig. 9 eine teilweise Schnittansicht gemäß der Linie IX-IX von Fig. 7,

Fig. 10 einen Längsschnitt durch einen Wirbelfrequenz-Durchflußmesser gemäß einer dritten Ausführungsform der Erfindung, wobei sich das Absperrorgan in der Offenstellung befindet,

Fig. 11 eine Schnittansicht gemäß der Linie IX-IX von Fig. 10,

Fig. 12 einen Längsschnitt durch den Wirbelfrequenz-Durchflußmesser von Fig. 10, wobei sich das Absperrorgan in der Sperrstellung befindet und

Fig. 13 eine Schnittansicht gemäß der Linie XIII-XIII von Fig. 12.

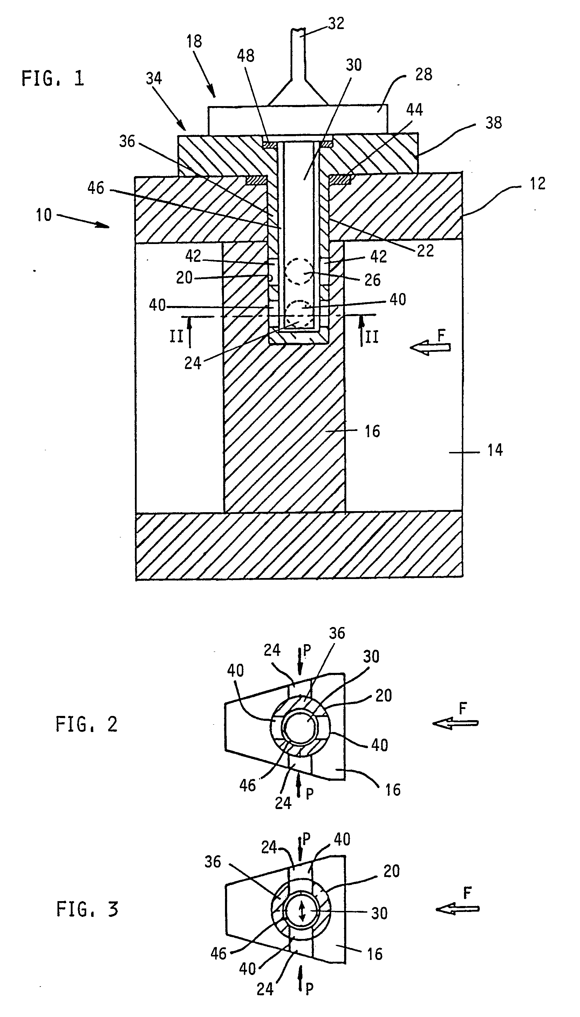

Der in Fig. 1 im Längsschnitt dargestellte Wirbelfrequenz-Durchflußmesser 10 weist einen Rohrkörper 12 auf, der in eine nicht dargestellte Rohrleitung eingefügt wird, so daß das Medium, dessen Durchfluß gemessen werden soll, in der Richtung des Pfeils F durch den zylindrischen Strömungskanal 14 des Rohrkörpers 12 strömt. In dem Rohrkörper 12 ist ein Staukörper 16 so angebracht, daß er sich quer zur Strömungsrichtung diametral durch den Strömungskanal 14 erstreckt. Der Staukörper 16 ist an beiden Enden an der Innenwand des Rohrkörpers 12 befestigt, beispielsweise durch Schweißen. Der Staukörper 16 ist ein prismatischer Körper, dessen Querschnitt, wie die Schnittansichten von Fig. 2 und 3 erkennen lassen, etwa trapezförmig ist, wobei die der größeren Grundlinie des Trapezes entsprechende Fläche des Prismas stromaufwärts zeigt und senkrecht zur Strömungsrichtung liegt. Bekanntlich erzeugt ein Staukörper dieser Art in dem vorbeiströmenden Medium Kármán'sche Wirbel, die stromabwärts vom Staukörper zwei parallele Wirbelstraßen bilden, wobei die Wirbel der einen Wirbelstraße gegen die Wirbel der anderen Wirbelstraße versetzt sind. Die Messung der Strömungsgeschwindigkeit des Mediums beruht darauf, daß der Abstand zwischen aufeinanderfolgenden Wirbeln in jeder Wirbelstraße über einen großen Bereich von Strömungsgeschwindigkeiten nahezu konstant ist. Die Folgefrequenz der Kármán'schen Wirbel ist somit der Strömungsgeschwindigkeit proportional. Der Wirbelfrequenz-Durchflußmesser 10 ist daher so ausgebildet, daß er ein elektrisches Signal liefert, das für die Folgefrequenz der Kármán'schen Wirbel kennzeichnend ist. Zur Erzeugung dieses elektrischen Signals wird die Tatsache ausgenutzt, daß die Wirbel Druckschwankungen mit der gleichen Frequenz verursachen. Der Wirbelfrequenz-Durchflußmesser 10 enthält eine Sensor-Baugruppe 18, die auf die von den Wirbeln erzeugten Druckschwankungen anspricht und ein von der Frequenz dieser Druckschwankungen abhängiges elektrisches Signal erzeugt.

In dem oberen Teil des Staukörpers 16 ist ein zylindrischer Hohlraum 20 ausgebildet, der sich von dem Ende des Staukörpers axial über einen Teil von dessen Länge erstreckt. Durch die Wand des Rohrkörpers 12 verläuft koaxial zu dem Hohlraum 20 eine Bohrung 22, die den gleichen Durchmesser wie der Hohlraum 20 hat. Im Staukörper 16 sind Durchlässe angebracht, die von den Seitenflächen des Prismas quer zur Strömungsrichtung in den Hohlraum 20 münden. Ein erstes Paar von Durchlässen 24 ist nahe dem unteren Ende des Hohlraums 20 angebracht, und ein zweites Paar von Durchlässen 26 ist im Abstand darüber nahe dem oberen Ende des Hohlraums 20 angebracht. Die Durchlässe 24 und 26 können, wie in Fig. 1 gestrichelt angedeutet ist, einen kreisrunden Querschnitt haben.

Die Sensor-Baugruppe 18 weist einen außerhalb des Rohrkörpers 12 befestigten Sensorträger 28 auf, an dem der auf die Druckschwankungen ansprechende Sensor 30 so angebracht ist, das er durch die Bohrung 22 in den Hohlraum 20 des Staukörpers 16 ragt und sein freies Ende etwa auf der Höhe der unteren Durchlässe 24 liegt. Der Sensor 30 kann in irgendeiner bei Wirbelfrequenz-Durchflußmessern an sich bekannten Art ausgebildet sein. Beispielsweise kann der in Fig. 1 sichtbare Teil des Sensors 30 eine am unteren Ende geschlossene Sensorhülse sein, die durch die von den Wirbeln verursachten Druckschwankungen, die durch die Durchlässe 24 und 26 in den Hohlraum 12 übertragen werden, in Schwingungen versetzt wird, und in deren Innenraum ein in der Zeichnung nicht sichtbarer Schwingungssensor angeordnet ist, der die Schwingungen der Sensorhülse in ein elektrisches Signal umgesetzt, das die gleiche Frequenz wie die Druckschwingungen hat und über ein Kabel 32 zu einem nicht dargestellten Auswertegerät übertragen wird.

Der Schwingungssensor kann in an sich bekannter Weise als piezoelektrischer oder als kapazitiver Sensor ausgebildet sein.

Als weiterer wesentlicher Bestandteil des Wirbelfrequenz-Durchflußmessers 10 ist ein Absperrorgan 34 vorgesehen, das aus einer Sperrbüchse 36 besteht, die am einen Ende mit einem Betätigungsteil 38 verbunden ist. Die Sperrbüchse 36 ist ein am unteren Ende verschlossener Hohlzylinder, der durch die Bohrung 22 in den Hohlraum 20 eingesteckt ist. Der Außendurchmesser der Sperrbüchse 36 entspricht dem Durchmesser des Hohlraums 20, so daß sie im wesentlichen spielfrei, aber drehbar im Hohlraum 20 sitzt, und die Länge der Sperrbüchse 36 ist so bemessen, daß ihr verschlossenes unteres Ende bis zum Boden des Hohlraums 20 reicht, wenn das Betätigungsteil 38 an der Außenfläche des Rohrkörpers 12 anliegt. In der Sperrbüchse 36 sind zwei Paare von radialen Durchlässen 40 und 42 so angebracht, daß sie auf der Höhe der Durchlässe 24 bzw. 26 des Staukörpers 16 liegen, wenn die Sperrbüchse 36 in den Hohlraum 20 eingesetzt ist. Eine Dichtung 44, die in eine Ringnut an der Außenfläche der Wand des Rohrkörpers 12 eingesetzt ist, umgibt das mit dem Betätigungsteil 38 verbundene Ende der Sperrbüchse 36.

Der Sensor 30 ist seinerseits in das hohle Innere der Sperrbüchse 36 eingesteckt. Sein Außendurchmesser ist kleiner als der Innendurchmesser der Sperrbüchse 36, so daß zwischen dem Sensor 30 und der Sperrbüchse 36 ein ringförmiger Zwischenraum 46 besteht. Das untere Ende des Sensors 30 liegt im Abstand vom Boden der Sperrbüchse 36, wenn der Sensor 30 vollständig in die Sperrbüchse 36 eingesteckt ist. Zwischen dem Betätigungsteil 38 und dem daran anliegenden Teil des Sensorträgers 28 ist eine Dichtung 48 angeordnet, die in eine Ringnut an der Oberseite des Betätigungsteils 38 eingelegt ist.

Wenn die Teile die in Fig. 1 und 2 dargestellte Stellung einnehmen, sind die Durchlässe 40 und 42 der Sperrbüchse 36 um 90° gegen die Durchlässe 24, 26 des Staukörpers 16 verdreht. In dieser Stellung unterbricht die Sperrbüchse 36 die Verbindung zwischen dem Strömungskanal 14 und dem Hohlraum 20, so daß kein Strömungsmedium aus dem Strömungskanal 14 in den Hohlraum 20 eintreten kann. Demzufolge können auch die von den Wirbeln verursachten Druckschwankungen, die in Fig. 2 durch die Pfeile P angedeutet sind, nicht auf den in den Hohlraum 20 ragenden Sensor 30 einwirken. Der Wirbelfrequenz-Durchflußmesser 10 ist daher in dieser Stellung der Sperrbüchse 36 außer Betrieb. Es ist jedoch möglich, die Sensor-Baugruppe 18 von dem Durchflußmesser abzunehmen und dabei den Sensor 30 aus dem Hohlraum 20 herauszuziehen, ohne daß Strömungsmedium austreten kann. Dadurch können Wartungs-oder Reparaturarbeiten am Sensor vorgenommen werden, ohne daß der Staukörper 16 ausgebaut werden muß und ohne daß es erforderlich ist, die Strömung des Mediums durch den Strömungskanal 14 zu unterbrechen.

Wenn die Sensor-Baugruppe 18 wieder richtig in den Durchflußmesser 10 eingebaut ist, so daß der Sensor 30 die in Fig. 1 gezeigte Stellung einnimmt, kann die Durchflußmessung auf einfache Weise dadurch in Gang gesetzt werden, daß die Sperrbüchse 36 um 90° in die in Fig. 3 gezeigte Stellung gedreht wird, in der sich die Durchlässe 40 mit den Durchlässen 24 und in entsprechender Weise die Durchlässe 42 mit den Durchlässen 26 decken. In dieser Stellung der Sperrbüchse 36 kann Strömungsmedium aus dem Strömungskanal 14 durch die Durchlässe in den Zwischenraum 46 eintreten, und die von den Wirbeln verursachten Druckschwankungen können auf den Sensor 30 einwirken und diesen in Schwingungen versetzen, wie in Fig. 3 durch einen Doppelpfeil angedeutet ist.

Die Drehung der Sperrbüchse 36 kann beispielsweise von Hand mittels des Betätigungsteils 38 erfolgen. Zweckmäßig sind an geeigneter Stelle am Rohrkörper 12 oder am Staukörper 16 einerseits und am Absperrorgan andererseits Anschläge angebracht, die die 90°-Drehbewegung des Absperrorgans begrenzen.

Da der Sensor 30 einen bestimmten Mindestdurchmesser aufweist, ist die Ausführungsform nach den Figuren 1 bis 3 hauptsächlich für Durchflußmesser mit verhältnismäßig großen Nennweiten (Durchmessern des Strömungskanals 14) geeignet, bei denen der Staukörper 16 groß genug ist, um in seinem Innern Platz für einen Hohlraum 20 zu bieten, der den Sensor 30 zusätzlich zu der Sperrbüchse 36 aufnehmen kann. Bei Durchflußmessern mit kleinen Nennweiten ist der Staukörper so klein, daß der Sensor in seinem Innern nicht mehr untergebracht werden kann. Nachfolgend werden Ausführungsformen beschrieben, die für Durchflußmesser mit kleinen Nennweiten geeignet sind.

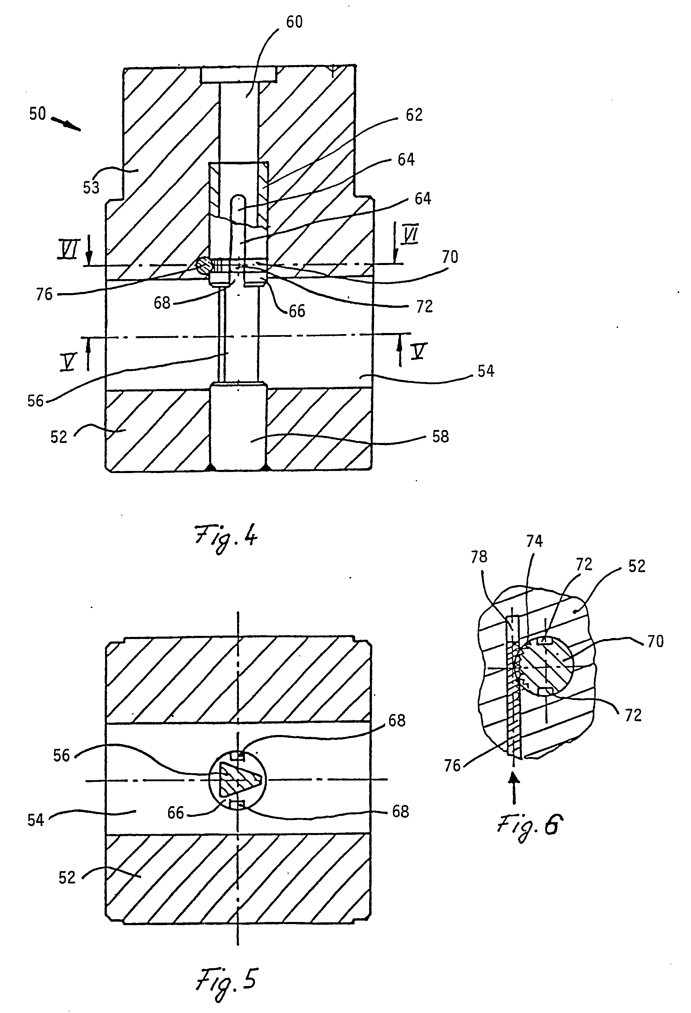

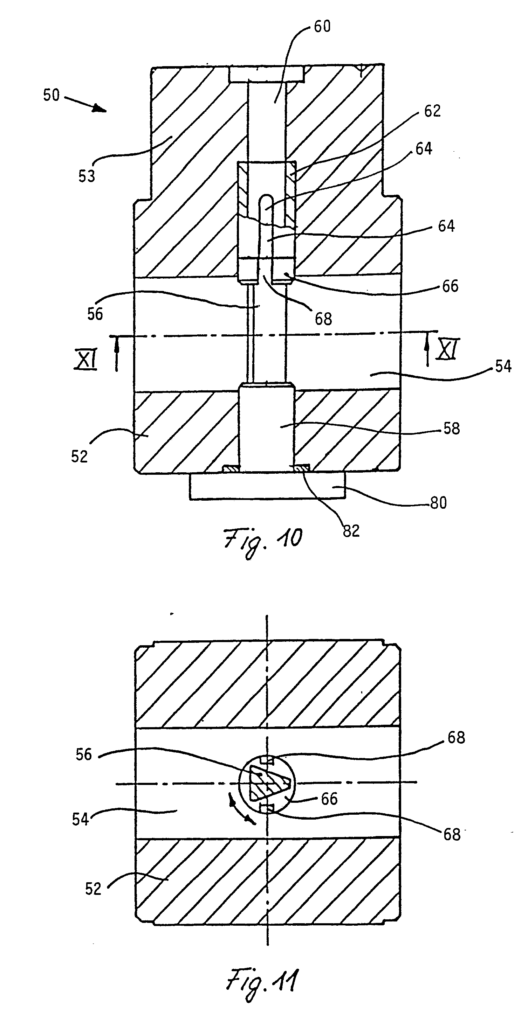

Der in den Figuren 4 bis 9 dargestellte Wirbelfrequenz-Durchflußmesser 50 weist einen Rohrkörper 52 auf, in dessen Strömungskanal 54 ein Staukörper 56 angebracht ist. Der Staukörper 56 ist massiv und am unteren Ende mit einem zylindrischen Ansatz 58 versehen, der in einer Bohrung in der Wand des Rohrkörpers 52 befestigt ist, beispielsweise durch Schweißen. Die Sensor-Baugruppe ist in den Figuren 4 bis 9 zur Vereinfachung nicht dargestellt. Der für die Aufnahme des Sensors bestimmte Hohlraum 60 ist in diesem Fall nicht im Innern des Staukörpers 56 gebildet, sondern in Verlängerung der Achse des Staukörpers in der Wand des Rohrkörpers 52, die an dieser Stelle eine Verdickung 53 aufweist, damit eine ausreichende axiale Länge des Hohlraums 60 erhalten wird. Der Hohlraum 60 hat in seinem dem Staukörper 56 benachbarten unteren Bereich einen etwas größeren Durchmesser als im oberen Bereich, und in diesen Bereich größeren Durchmessers ist eine Buchse 62 eingesetzt, deren Innendurchmesser gleich dem kleinen Durchmesser des oberen Bereichs des Hohlraums 60 ist. In der Buchse 62 sind zwei einander diametral gegenüberliegende Schlitze 64 angebracht, die sich vom unteren Ende der Buchse über den größeren Teil ihrer Länge nach oben erstrecken. Diese Schlitze 64 liegen in einer senkrecht zur Strömungsrichtung liegenden Durchmesserebene des Strömungskanals 52.

Am oberen Ende des Staukörpers 56 ist ein scheibenförmiger Bund 66 angeformt, der den gleichen Außendurchmesser wie die Buchse 62 hat und unterhalb der Buchse 62 in dem erweiterten Bereich des Hohlraums 60 sitzt. Am Rand des Bundes 66 sind zwei einander diametral gegenüberliegende Ausschnitte 68 so angebracht, daß sie in axialer Verlängerung der Schlitze 64 liegen.

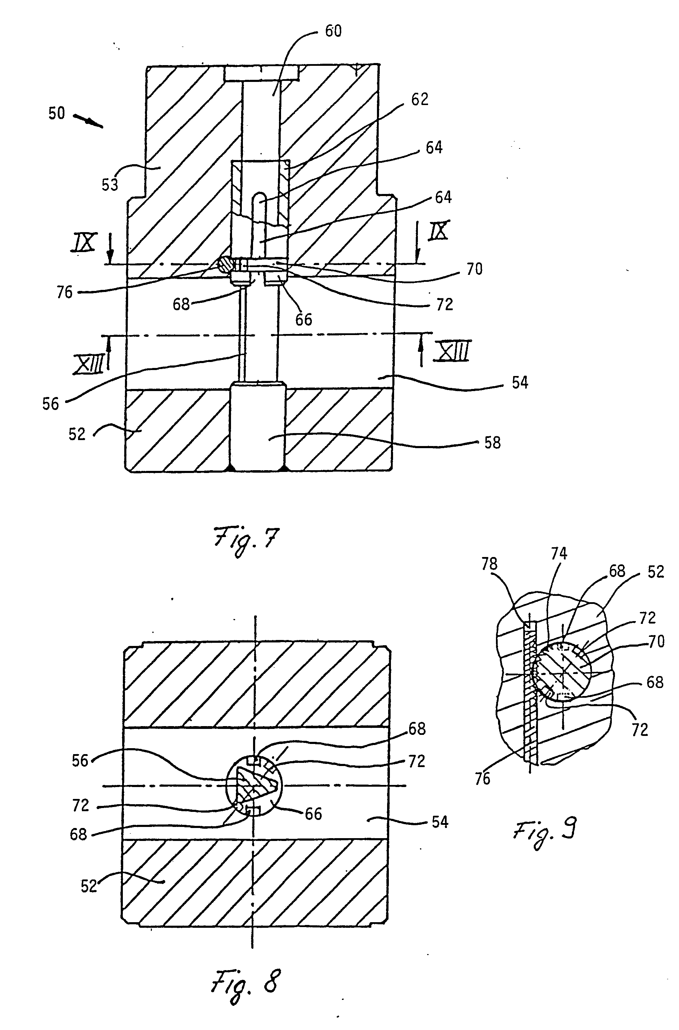

Zwischen den einander zugewandten Stirnflächen der Buchse 62 und des Bundes 66 ist als Absperrorgan eine drehbare Sperrscheibe 70 eingelegt, die den gleichen Durchmesser wie die Buchse 62 und der Bund 66 hat. Am Rand der Sperrscheibe 70 sind zwei einander diametral gegenüberliegende Ausschnitte 72 angebracht, die die gleiche Form wie die Ausschnitte 68 des Bundes 66 haben. Zwischen den Ausschnitten 72 ist die Sperrscheibe 70 über einen Teil ihres Umfangs mit einer Verzahnung 74 versehen (Fig. 6 und 9), in die die Verzahnung einer Zahnstange 76 eingreift, die in einer Bohrung 78 in der Wand der Rohrkörpers 52 längsverschieblich gelagert ist. Durch Verschieben der Zahnstange 76 kann daher die Sperrscheibe 70 um einen begrenzten Winkel gedreht werden.

In den Figuren 4, 5 und 6 ist die Sperrscheibe 70 mittels der Zahnstange 76 so eingestellt, daß ihre Ausschnitte 72 mit den Ausschnitten 68 des Bundes 66 und mit den Schlitzen 64 der Buchse 62 fluchten. In dieser Stellung der Teile kann Strömungsmedium aus dem Strömungskanal 54 durch die Ausschnitte 68 und 72 sowie durch die Schlitze 64 in den Hohlraum 60 eintreten, und die von den Wirbeln verursachten Druckschwankungen können auf den im Hohlraum 60 befindlichen (in der Zeichnung nicht dargestellten) Sensor einwirken.

In den Figuren 7, 8 und 9 ist dagegen die Sperrscheibe 70 mittels der Zahnstange 76 so verdreht, daß ihre Ausschnitte 72 nicht mehr mit den Ausschnitten 68 des Bundes 66 und den Schlitzen 64 der Buchse 62 fluchten. Somit unterbricht die Sperrscheibe 70 die Verbindung zwischen dem Strömungskanal 54 und dem Hohlraum 60, so daß kein Strömungsmedium aus dem Strömungskanal 54 in den Hohlraum 60 eintreten kann und auch die von den Wirbeln verursachten Druckschwankungen nicht mehr in den Hohlraum 60 übertragen werden können. Bei dieser Stellung der Sperrscheibe 70 kann die Sensor-Baugruppe entnommen werden, ohne daß die Gefahr besteht, daß Strömungsmedium austritt.

In den Figuren 10 bis 13 ist eine Abänderung der Ausführungsform von Fig. 4 bis 9 dargestellt, wobei die einander entsprechenden Teile mit den gleichen Bezugszeichen wie in den Figuren 4 bis 9 bezeichnet sind und nicht nochmals beschrieben werden. Die Ausführungsform von Fig. 10 bis 13 unterscheidet sich von derjenigen von Fig. 4 bis 9 nur in folgender Hinsicht:

- die Sperrscheibe 70 und die Zahnstange 78 sind fortgelassen, und der Bund 66 liegt unmittelbar am unteren Ende der Buchse 62 an;

- der Staukörper 56 ist mittels des zylindrischen Ansatzes 58 im Rohrkörper 52 drehbar gelagert, wobei die Drehung beispielsweise von Hand mittels eines am zylindrischen Ansatz 58 angebrachten Betätigungsteils 80 vorgenommen werden kann und eine Dichtung 82 die erforderliche Abdichtung bewirkt.

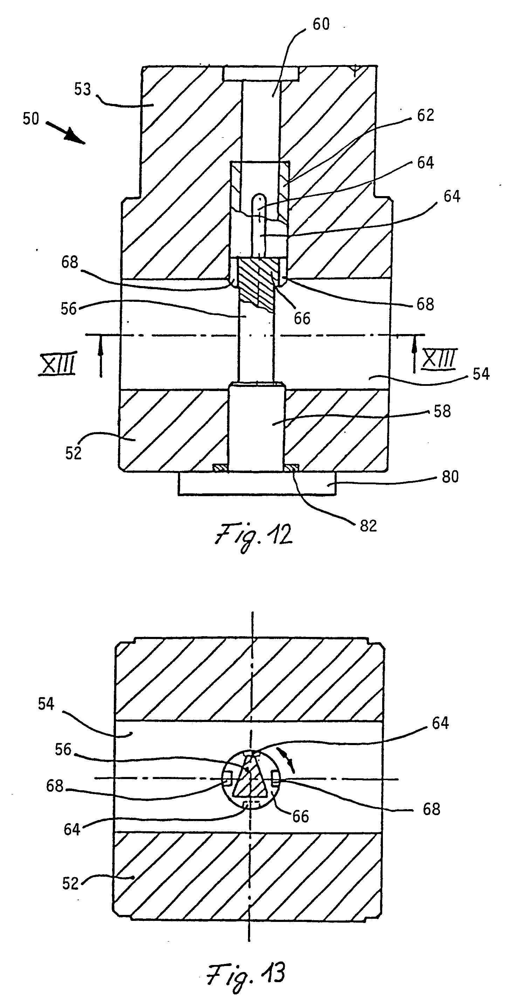

Bei dieser Ausführungsform bildet der Bund 66 das Absperrorgan. Wenn der Staukörper 56 die in den Figuren 10 und 11 dargestellte Stellung einnimmt, in der er die richtige Position für die Erzeugung der Kármán'schen Wirbel hat, fluchten die Ausschnitte 68 im Bund 66 mit den Schlitzen 64 der Buchse 62, so daß Strömungsmedium aus dem Strömungskanal 54 in den Hohlraum 60 eintreten kann und die von den Wirbeln verursachten Druckschwankungen in den Hohlraum 60 übertragen werden. Wenn dagegen der Staukörper 56 gegenüber dieser Stellung um 90° verdreht ist, so daß er die in den Figuren 12 und 13 dargestellte Stellung einnimmt, sind die Ausschnitte 68 gegen die Schlitze 64 versetzt, so daß die Verbindung zwischen dem Strömungskanal 54 und dem Hohlraum 60 unterbrochen ist. Bei dieser Stellung des Staukörpers 56 kann die Sensor-Baugruppe entnommen werden, ohne daß Strömungsmedium austreten kann.

Wie zu erkennen ist, kann bei den Ausführungsformen von Fig. 4 bis 13 der Querschnitt des für die Aufnahme des Sensors bestimmten Hohlraums 60 von gleicher Größenordnung wie der Querschnitt des Staukörpers oder sogar größer als dieser sein. Daher eignet sich diese Ausführungsform besonders gut für Durchflußmesser mit kleinen Nennweiten.

**Ansprüche**

1. Wirbelfrequenz-Durchflußmesser mit einem Rohrkörper, der einen Strömungskanal für das Medium aufweist, dessen Durchfluß gemessen werden soll, einem im Strömungskanal angeordneten Staukörper zur Erzeugung von Wirbeln, deren Folgefrequenz der Strömungsgeschwindigkeit des Mediums proportional ist, und mit mindestens einem Sensor, der auf die von den Wirbeln erzeugten Druckschwankungen anspricht und in einem Hohlraum angeordnet ist, der durch verschließbare Durchlässe mit dem Strömungskanal in Verbindung steht, **dadurch gekennzeichnet,** daß zum Verschließen der Durchlässe ein durch ein Betätigungsteil von außen verstellbares Absperrorgan vorgesehen ist.

2. Wirbelfrequenz-Durchflußmesser nach Anspruch 1, **dadurch gekennzeichnet,** daß das Absperrorgan drehbar ist.

3. Wirbelfrequenz-Durchflußmesser nach Anspruch 2, **dadurch gekennzeichnet,** daß der Hohlraum im Innern des Staukörpers angeordnet ist, daß die Durchlässe im Staukörper angebracht sind und daß das Absperrorgan eine im Hohlraum drehbar angeordnete hohlzylindrische Sperrbüchse ist, in deren Wand Öffnungen angebracht sind, die durch Verdrehen der Sperrbüchse in oder außer Deckung mit den Durchlässen gebracht werden können.

4. Wirbelfrequenz-Durchflußmesser nach Anspruch 2, **dadurch gekennzeichnet,** daß der Hohlraum und die Durchlässe im Rohrkörper angeordnet sind und daß das Absperrorgan ein das Ende des Hohlraums abschließendes kreisrundes Teil ist, das Öffnungen aufweist, die durch Verdrehen des kreisrunden Teils in oder außer Deckung mit den Durchlässen gebracht werden können.

5. Wirbelfrequenz-Durchflußmesser nach Anspruch 4, **dadurch gekennzeichnet,** daß das Absperrorgan eine Scheibe ist, die am Ende des Hohlraums in der Wand des Rohrkörpers drehbar gelagert und durch ein von außen betätigbares Getriebe verstellbar ist.

6. Wirbelfrequenz-Durchflußmesser nach Anspruch 5, **dadurch gekennzeichnet,** daß das Getriebe eine Zahnstange aufweist, die in eine an der Scheibe angebrachte Verzahnung eingreift.

7. Wirbelfrequenz-Durchflußmesser nach Anspruch 4, **dadurch gekennzeichnet,** daß der Staukörper im Rohrkörper drehbar gelagert ist und daß das Absperrorgan durch einen am Ende des Staukörpers angebrachten Bund gebildet ist, in dem Öffnungen angebracht sind, die durch Verdrehen des Staukörpers in oder außer Deckung mit den Durchlässen gebracht werden können.

8. Wirbelfrequenz-Durchflußmesser nach Anspruch 7, **dadurch gekennzeichnet,** daß an dem dem Bund entgegengesetzten Ende des Staukörpers ein zylindrischer Ansatz angebracht ist, der in einer Bohrung in der Wand des Rohrkörpers drehbar gelagert ist, und daß das Betätigungsteil an dem Ende des zylindrischen Ansatzes außerhalb des Rohrkörpers angebracht ist.

FIG. 1

FIG. 2

FIG. 3

Fig. 4

Fig. 5

Fig. 6

Fig. 7

Fig. 8

Fig. 9

Fig. 10

Fig. 11

Fig. 12

Fig. 13